# EUROPÄISCHE PATENTSCHRIFT

(11) **EP 4 176 170 B1**
(45) Veröffentlichungstag und Bekanntmachung des Hinweises auf die Patenterteilung: **28.08.2024**
(21) Anmeldenummer: 21719867.0
(22) Anmeldetag: 12.04.2021
(51) Int. Cl.: F02M 21/02, F02M 61/08, F02M 61/12, F02M 63/00

(54) **GASINJEKTOR MIT REDUZIERTEM VERSCHLEISS**
GAS INJECTOR HAVING REDUCED WEAR
INJECTEUR DE GAZ À USURE RÉDUITE

(30) Priorität: 02.07.2020 DE 102020208273
(43) Veröffentlichungstag der Anmeldung: 10.05.2023
(73) Patentinhaber: Robert Bosch GmbH, 70442 Stuttgart (DE)
(72) Erfinder: MUELLER, Martin, 71696 Moeglingen (DE)
(86) Internationale Anmeldenummer: PCT/EP2021/059438
(87) Internationale Veröffentlichungsnummer: WO 2022/002454

(56) Entgegenhaltungen:
- DE-A1- 102008 041 544
- DE-A1- 102016 205 358
- DE-A1- 19 901 711
- US-A1- 2004 079 815

## Beschreibung

### Stand der Technik

Die vorliegende Erfindung betrifft einen Gasinjektor zum Einblasen eines gasförmigen Brennstoffs, insbesondere Wasserstoff oder Erdgas oder dergleichen mit einem reduzierten Verschleiß insbesondere für Brennkraftmaschinen. Der Gasinjektor ist insbesondere für eine Direkteinblasung in einen Brennraum einer Brennkraftmaschine ausgelegt.

Gasinjektoren sind aus dem Stand der Technik in unterschiedlichen Ausgestaltungen bekannt, wie z.B. aus DE 102008041544 A1.

Ein Problemkreis bei Gasinjektoren liegt prinzipbedingt darin, dass aufgrund des gasförmigen, einzublasenden Mediums keine Schmierung durch das Medium möglich ist, wie dies beispielsweise bei Kraftstoffinjektoren, welche Benzin oder Diesel einspritzen, möglich ist. Daraus resultiert im Betrieb ein übermäßiger Verschleiß im Vergleich mit Kraftstoffinjektoren für flüssige Kraftstoffe. Hierbei wäre es wünschenswert, einen Gasinjektor mit einem verbesserten Verschleißverhalten zu haben.

### Offenbarung der Erfindung

Der erfindungsgemäße Gasinjektor zum Einblasen eines gasförmigen Brennstoffs mit den Merkmalen des Anspruchs 1 weist hiergegen den Vorteil auf, dass ein Verschleiß des Gasinjektors signifikant reduziert werden kann. Dadurch wird eine Lebensdauer des Gasinjektors verlängert und entspricht im Wesentlichen einer Lebensdauer eines Kraftstoffinjektors für flüssige Kraftstoffe. Dies wird erfindungsgemäß dadurch erreicht, dass der Gasinjektor ein in einem abgeschlossenen Schmiermittelraum befindliches Schmiermittel aufweist, in welchem bewegliche Teile des Gasinjektors angeordnet sind. Der Gasinjektor umfasst einen Magnetaktor mit einem Anker, einem Innenpol und einer Spule.

Hierbei ist der Anker, welcher mit einem Schließelement, das einen Gaspfad an einem Ventilsitz freigibt und verschließt, mechanisch verbunden, um eine Bewegung zum Öffnen und/oder Schließen des Injektors zu ermöglichen. Der im Schmiermittelraum befindliche Anker, welcher bei einer Bestromung der Spule gegen den Innenpol des Magnetaktors aufgrund elektromagnetischer Kräfte gezogen wird, befindet sich somit im Inneren des Schmiermittelraums und wird ständig mit Schmiermittel versorgt und geschmiert. Dadurch ist ein Verschleiß am Anker im Vergleich mit den bisher aus dem Stand der Technik bekannten Gasinjektoren signifikant reduziert. Um eine Abdichtung des Schmiermittelraums sicherzustellen, ist ein flexibles Dichtelement vorgesehen, welches den Schmiermittelraum an einem Teilbereich gegenüber dem Schließelement abdichtet. Somit kann durch Verwendung des abgeschlossenen, mit Schmiermittel gefüllten Schmiermittelraums die Lebensdauer des Gasinjektors signifikant verlängert werden. Vorzugsweise ist der Schmiermittelraum dabei vollständig mit Schmiermittel befüllt.

Erfindungsgemäß ist im Schmiermittelraum eine Bremseinrichtung angeordnet, welche eingerichtet ist, um das Schließelement bei einem Rückstellvorgang des Schließelements abzubremsen. Hierdurch kann ein Verschleiß am Ventilsitz reduziert werden, da durch das Abbremsen des Schließelements beim Rückstellvorgang ein Anschlagen des Schließelements an den Ventilkörpersitz reduziert werden kann. Die Bremseinrichtung kann den Impuls beim Auftreffen des Schließelements auf den Ventilkörper reduzieren, insbesondere da der Ventilsitz üblicherweise sehr trocken ist und in der heißen Brennraumatmosphäre sitzt.

Die Bremseinrichtung umfasst erfindungsgemäß einen Bremsbolzen und ein elastisches Bremselement, beispielsweise eine Feder oder ein elastisches Bauteil. Das Schließelement ist eine Ventilnadel, die separat zum Bremsbolzen ausgeführt ist, und der Bremsbolzen ist beim Rückstellvorgang in Wirkverbindung mit dem Anker und/oder dem Schließelement bringbar, sodass der Anker vor seinem eigentlichen Anschlagen am Anschlag auf den Bremsbolzen trifft und diesen gegen die Kraft des elastischen Elements bewegt, wodurch eine Dämpfung des Ankers beim Rückstellvorgang möglich ist. Insbesondere wird eine Rückstellgeschwindigkeit des Ankers reduziert. Dies wird zusätzlich noch durch die mit der Bremseinrichtung bereitgestellten Beschleunigung der zusätzlichen Massen unterstützt. Weiterhin wird über die Verdrängung des Schmierstoffs zwischen dem Anker und dem Bremsbolzen eine weitere Abbremsung realisiert. Auch kann durch Reibung von Führungselementen oder dergleichen mit dem Bremsbolzen eine Rückstellgeschwindigkeit des Schließelements weiter reduziert werden. Dies alles reduziert die Aufschlagkraft des Ankers am Anschlag, sodass eine Lebensdauer des Ankers weiter verlängert werden kann.

Besonders bevorzugt ist am Bremsbolzen ein Bremsführungselement angeordnet, welches eine stabile Bewegung des Führungsbolzens sicherstellt. Ferner kann durch das Bremsführungselement zusätzlich noch Reibung beim Rückstellvorgang des Schließelements erzeugt werden, welche zusätzlich eine Dämpfungsfunktion bereitstellt.

Vorzugsweise ist im geschlossenen Zustand des Injektors ein Axialspalt B zwischen dem Bremsführungselement und dem Bremsbolzen kleiner als ein Axialspalt C zwischen dem Anker und dem Innenpol. Der Axialspalt B zwischen dem Bremsführungselement und dem Bremsbolzen liegt dabei in einem Bereich von 1 % bis 90 % des Axialspalts C zwischen Anker und Innenpol. Besonders bevorzugt ist der Axialspalt B zwischen Bremsführungselement und Bremsbolzen dabei kleiner als 25 % des Axialspalts C, weiter bevorzugt in einem Bereich von 3 % bis 10 % des Axialspalts C. Der Axialspalt C weist vorzugsweise eine Größe von 0,05 mm bis 3 mm, insbesondere 0,3 mm auf.

Vorzugsweise wird als Schmiermittel ein Öl, insbesondere Mineralöl verwendet. Alternativ wird ein flüssiger Kraftstoff, insbesondere Diesel oder Benzin verwendet. Weiter alternativ wird als Schmiermittel ein Fett verwendet.

Weiter bevorzugt ist das flexible Dichtelement ein einlagiger oder mehrlagiger Balg. Der Balg ist vorzugsweise aus Metall oder alternativ aus einem Kunststoff. Der Balg ist vorzugsweise mit einem ersten Ende direkt am Schließelement fixiert und mit einem anderen Ende an einem Gehäusebauteil des Gasinjektors fixiert. Die Fixierung kann beispielweise bei Metallbälgen mittels einer Schweißnaht erfolgen.

Alternativ ist das flexible Dichtelement eine Membran. Die Membran kann einlagig oder mehrlagig sein und beispielsweise mittels Laserschweißen an den jeweiligen Bauteilen zur Abdichtung des Schmiermittelraums fixiert sein. Vorzugsweise ist ein Gaspfad des gasförmigen Brennstoffs in einem Bereich zwischen einem Ventilgehäuse des Gasinjektors und einem Aktorgehäuse des Gasinjektors vorgesehen. Dadurch kann der Aktor in einem Gehäuse angeordnet werden und zumindest teilweise als Baugruppe vormontiert werden. Dadurch kann auch auf relativ einfache Weise der Schmiermittelraum im Inneren des Aktorgehäuses angeordnet werden.

Alternativ ist der Gaspfad des gasförmigen Brennstoffs durch einen Bereich des Magnetaktors, insbesondere durch den Spulenraum, in welchem die Spule des Magnetaktors angeordnet ist, ausgebildet. Dadurch kann ein separates Aktorgehäuse für den Magnetaktor entfallen. Besonders bevorzugt ist dann eine elektrische Kontaktierung durch den Gaspfad des gasförmigen Brennstoffs geführt. Dadurch kann insbesondere eine Komplexität des Aufbaus des Gasinjektors reduziert werden. Es sei angemerkt, dass die elektrische Kontaktierung, welche durch den Gasraum führt, nach außen hin selbstverständlich abgedichtet werden muss.

Weiter bevorzugt ist im Gaspfad für den gasförmigen Brennstoff ein Filter angeordnet, um gegebenenfalls im gasförmigen Brennstoff vorhandene Feststoffpartikel herauszufiltern oder um herstellbedingte oder montagebedingte Feststoffpartikel herauszufiltern. Weiter bevorzugt ist am Schließelement auch ein Führungsbauteil vorgesehen, insbesondere, wenn das Schließelement eine lange Ventilnadel ist.

Der Gasinjektor ist vorzugsweise ein nach außen öffnender Injektor. Weiter bevorzugt ist der Gasinjektor druckausgeglichen. Dadurch ist die Kraft zum Öffnen des Gasinjektors durch den Magnetaktor unabhängig vom Gasdruck. Die Zeit zum Öffnen und Schließen des Injektors nach Bestromungsbeginn bzw. Bestromungsende ist somit auch unabhängig vom Gasdruck. Dieses wiederum erlaubt einen Betrieb bei verschiedenen Gasdrücken. Bei gewünscht kleiner Einblasmenge kann der Gasdruck reduziert werden und bei gewünscht großer Einblasmenge kann der Gasdruck angehoben werden. Der Injektor ist druckausgeglichen, wenn der mittlere Durchmesser des Balgs gleich dem Durchmesser der Sitzberührlinie zwischen Schließelement und Ventilkörper ist. Der mittlere Balgdurchmesser kann aber auch kleiner oder größer als der Sitzdurchmesser ausgeführt sein. Im ersten Fall reduziert sich bei einem höheren Gasdruck die gesamte Schließkraft auf die Ventilnadel und der Injektor öffnet bei Bestromung schneller und schließt langsamer nach der Bestromung. Das ergibt eine erhöhte Gaseinblasmenge. Im zweiten Fall erhöht sich bei einem höheren Gasdruck die Schließkraft auf die Ventilnadel. Das wiederum kann eine Erhöhung der Sitzleckagemenge durch den höheren Gasdruck kompensieren.

Eine Rückstellung erfolgt vorzugsweise mittels einer Rückstellfeder. Bei einem druckausgeglichenen Injektor liegt insbesondere keine Druckkraft auf die Ventilnadel durch den gasförmigen Brennstoff im geschlossenen Zustand des Gasinjektors vor, sodass eine Belastung des Schließelements signifikant reduziert werden kann.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Schnittansicht eines Gasinjektors gemäß einem ersten Ausführungsbeispiel der Erfindung,
- Figur 2: eine schematische, vergrößerte Teilschnittansicht des Gasinjektors von Figur 1,
- Figur 3: eine weitere schematische, vergrößerte Teilschnittansicht des Gasinjektors von Figur 1 und
- Figur 4: eine schematische Teilschnittansicht eines Gasinjektors gemäß einem zweiten Ausführungsbeispiel der Erfindung.

### Bevorzugte Ausführungsformen der Erfindung

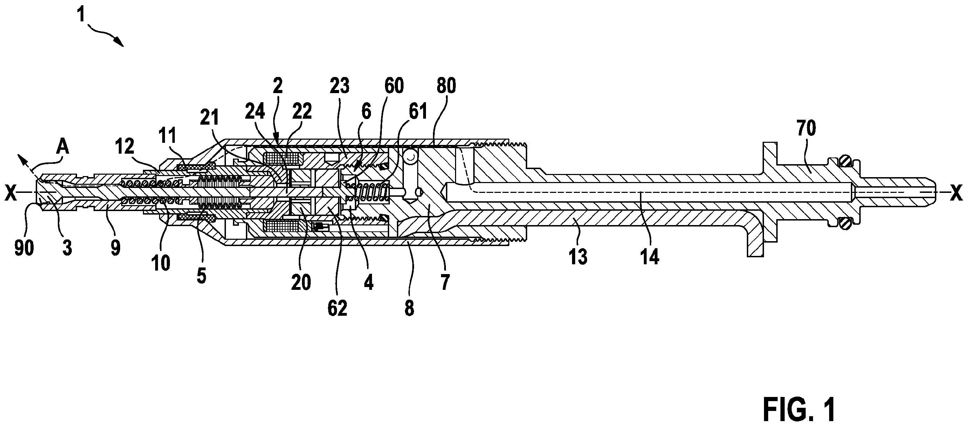

Nachfolgend wird unter Bezugnahme auf die Figuren 1 bis 3 ein Gasinjektor 1 gemäß einem ersten bevorzugten Ausführungsbeispiel der Erfindung im Detail beschrieben.

Wie aus Figur 1 ersichtlich ist, umfasst der Gasinjektor 1 zum Einbringen eines gasförmigen Brennstoffs einen Magnetaktor 2, welcher ein Schließelement 3 in diesem Ausführungsbeispiel eine nach außen öffnende Ventilnadel, von einem geschlossenen Zustand in einen geöffneten Zustand bewegt. Die Figuren 1 bis 3 zeigen dabei den geschlossenen Zustand des Gasinjektors.

Der Magnetaktor 2 umfasst einen Anker 20, welcher mittels eines Ankerbolzens 24 am Schließelement 3 anliegt. Ferner umfasst der Magnetaktor 2 einen Innenpol 21, eine Spule 22 und ein Magnetgehäuse 23, welches einen magnetischen Rückschluss des Magnetaktors sicherstellt.

Weiterhin umfasst der Gasinjektor 1 einen Hauptkörper 7 mit einem Anschlussrohr 70, durch welches der gasförmige Brennstoff zugeführt wird. Am Hauptkörper 7 ist dabei ein Ventilgehäuse 8 fixiert, in welchem der Magnetaktor 2 angeordnet ist. An das Ventilgehäuse 8 schließt sich ein Ventilkörper 9 an, an dessen freiem Ende ein Ventilsitz 90 vorgesehen ist, in welchem das Schließelement 3 einen Durchlass für den gasförmigen Brennstoff freigibt und verschließt.

In den Figuren 1 bis 3 ist schematisch ein elektrischer Anschluss 13, welcher durch den Hauptkörper 7 bis zum Magnetaktor 2 geführt ist, dargestellt.

Ein Haltekörper 12 ist vorgesehen, um den Innenpol 21 am Ventilkörper 9 zu fixieren.

Das Bezugszeichen 10 bezeichnet ein Rückstelleelement für das Schließelement 3, um dieses nach einem Öffnungsvorgang wieder in den in Figur 1 gezeigten geschlossenen Zustand zurückzustellen.

In Figur 1 ist ferner eine Gasströmung als Gaspfad 14 durch den Gasinjektor 1 dargestellt. Die Gasströmung beginnt dabei am Anschlussrohr und wird dann um 90° umgeleitet in einen Ringraum 80 zwischen dem Ventilgehäuse 8 und dem Hauptkörper 7. Die Gasströmung 14 geht dabei weiter an einem Außenbereich des Magnetaktors 2 vorbei durch einen Filter 11 in dem Bereich am Schließelement 3 bis vor zum Ventilsitz 90. Hierbei sind entsprechend Durchbrüche in den jeweiligen Bauteilen vorgesehen, welche in den Figuren nicht gezeigt sind.

Beim Öffnen des Gasinjektors 1 strömt dann der gasförmige Brennstoff am Außenumfang des Magnetaktors 2 und am geöffneten Dichtsitz 90 vorbei in einen Brennraum einer Brennkraftmaschine, was in Figur 1 durch den Pfeil A angedeutet ist.

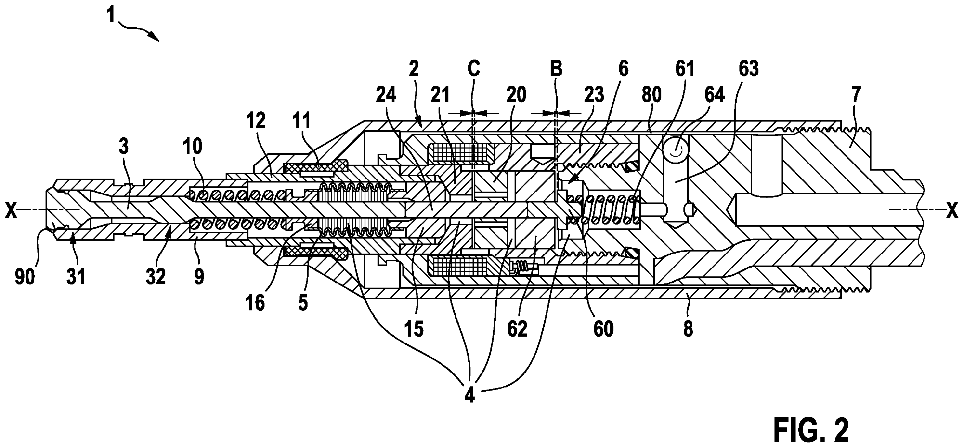

Das Schließelement 3 gibt somit einen Gaspfad am Ventilsitz 90 frei und verschließt diesen. Zur Führung sind ein erster Führungsbereich 31 und ein zweiter Führungsbereich 32 zwischen dem Schließelement 3 und dem Ventilkörper 9, wie im Detail aus Figur 2 ersichtlich ist.

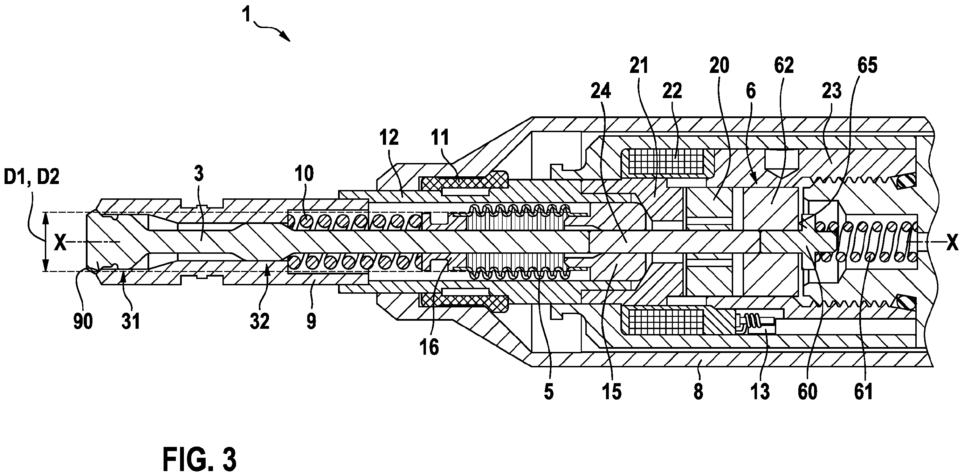

Ferner umfasst der Gasinjektor 1 einen abgeschlossenen Schmiermittelraum 4. Der Schmiermittelraum 4 ist im Detail aus den Figuren 2 und 3 ersichtlich. Der abgeschlossene Schmiermittelraum 4 ist vollständig oder teilweise mit einem Schmierstoff gefüllt.

Wie aus Figur 2 ersichtlich ist, wird der Schmiermittelraum 4 durch den Hauptkörper 7, das Magnetgehäuse 23, den Innenpol 21 und ein flexibles Dichtelement 5 in Form eines Faltenbalges abgeschlossen. Das flexible Dichtelement 5 dichtet dabei am Schließelement 3 ab. Somit ist das flexible Dichtelement 5 mit einem ersten Ende an einem Federteller 16 fixiert, welcher ein Rückstellelement 10 für das Schließelement 3 abstützt und mit einem zweiten Ende an einem hülsenförmigen Ring 15 fixiert. Dabei gleicht das flexible Dichtelement 5 die in Axialrichtung X-X des Injektors auftretende Bewegung des Schließelements 3 aus.

Im abgeschlossenen Schmiermittelraum 4 ist, wie aus den Figuren 2 und 3 im Detail ersichtlich, der Ankerbolzen 24 mit dem daran fixierten Anker 20 angeordnet. Da der Schmiermittelraum 4 mit einem Schmiermittel, beispielsweise einem flüssigen Kraftstoff wie Benzin oder Diesel oder einem Fett oder dergleichen gefüllt ist, ist eine kontinuierliche Schmierung des Ankers 20 gegeben. Dadurch kann das im Stand der Technik auftretende Problem bei gasförmigen Brennstoffen, dass eine fehlende Schmierung der bewegten Teile fehlt, kompensiert werden.

Wie aus Figur 2 ersichtlich ist, ist zum Befüllen des abgeschlossenen Schmiermittelraums 4 ein Füllkanal 63 im Hauptkörper 7 ausgebildet. Der Füllkanal 63 ist mittels einer Verschlusskugel 64 fluiddicht verschlossen.

Im abgeschlossenen Schmiermittelraum 4 ist ferner eine Bremseinrichtung 6 angeordnet. Die Bremseinrichtung 6 umfasst einen Bremsbolzen 60, eine Bremsfeder 61 und ein Bremsführungselement 62. Das Bremsführungselement 62 dient zum Führen des Bremsbolzens 60 und ist an einem Innenumfang des Magnetgehäuses 23 angeordnet (vgl. Figuren 2 und 3).

Der Bremsbolzen 60 ist dabei über den Ankerbolzen 24 mit dem Anker in Wirkverbindung.

Die Bremseinrichtung 6 hat dabei die Aufgabe, bei einem Schließvorgang des Gasinjektors 1 das Schließelement 3 samt dem Anker 20 abzubremsen. Die Abbremsung erfolgt dabei einerseits über die Bremsfederkraft durch die Bremsfeder 61 am Bremsbolzen 60 sowie ein hydraulisches Kleben an einer axialen Anlagefläche 65 zwischen dem Bremsbolzen 60 und dem feststehenden Bremsführungselement 62 (vgl. Figur 3) beim Abheben des Bremsbolzens 60 von der axialen Anlagefläche 65.

Zusätzlich wird beim Rückstellen des Schließelements 3 dieses durch die Reibung in dem Bremsführungselement 62, in welches auch der Ankerbolzen 24 teilweise vorsteht, abgebremst. Weiterhin führen die zu beschleunigten Massen und die Verdrängung des Schmierstoffs im abgeschlossenen Schmiermittelraum 4 zu einer zusätzlichen Abbremsung beim Schließvorgang.

Wie aus Figur 2 ersichtlich ist, ist im geschlossenen Zustand zwischen dem Anker 20 und dem Innenpol 21 ein Axialspalt C vorgesehen. Zwischen dem Bremsbolzen 60 und dem Bremsführungselement 62 ist ein Axialspalt B vorgesehen. Der Axialspalt C zwischen dem Anker 20 und Innenpol 21 ist vorzugsweise in einem Bereich von 0,05 bis 3 mm und beträgt besonders bevorzugt 0,2 mm bis 0,5 mm. Bei einer Bestromung der Spule 22 wird der Anker 20 dann gegen den Innenpol 21 gezogen, wodurch über den Ankerbolzen 24 das Schließelement 3 in den Öffnungszustand gebracht, sodass gasförmiger Brennstoff in den Brennraum ausströmen kann. Es sei angemerkt, dass zur Reduzierung von magnetischen Streuflüssen insbesondere der Ankerbolzen 24 und/oder der hülsenförmige Ring 15 aus nicht magnetisierbaren Materialien ausgeführt sind.

Der Axialspalt B zwischen dem Bremsbolzen 60 und dem Bremsführungselement 62 ist dabei kleiner als der Spalt C zwischen dem Anker 20 und dem Innenpol 21 und wird beim Öffnungsvorgang durch die Federkraft der Bremsfeder 61 ebenfalls geschlossen. Vorzugsweise ist der Spalt B 1 % bis 90 % des Spaltes C. Dadurch wird beim Rückstellvorgang das hydraulische Kleben des Bremsbolzens 60 am Bremsführungselement 62 realisiert.

Der in den Figuren 1 bis 3 gezeigte Gasinjektor 1 ist dabei druckausgeglichen. Das heißt, das Schließelement 3 ist über den Federteller 16 mit dem flexiblen Dichtelement 5 verbunden, wobei das als Metallbalg ausgeführte flexible Dichtelement 5 einen mittleren Durchmesser D1 aufweist, welcher gleich einem Durchmesser D2 am Ventilsitz 90 ist, an welchem das Schließelement 3 am Ventilkörper 9 abdichtet. Dadurch ergibt sich keine Druckkraft auf das Schließelement 3, sodass eine magnetische Kraft, welche zum Öffnen des Schließelements 3 notwendig ist, sehr klein gehalten werden kann und insbesondere unabhängig von einem Druck des gasförmigen Brennstoffs ist.

Es sei angemerkt, dass als flexibles Dichtelement 5 anstatt des Balges auch beispielsweise eine Membran oder ein Schlauch oder dergleichen sein kann.

Somit kann der Gasinjektor 1 einen reduzierten Verschleiß an den bewegten Teilen, insbesondere am Ventilsitz 90, Anker 20 und im Ankerbolzen 24, bereitstellen. Weiterhin kann durch den abgeschlossenen Schmiermittelraum 4 mit einem flüssigen Schmiermittel eine Wärmeableitung aus dem Magnetaktor 2 deutlich verbessert werden.

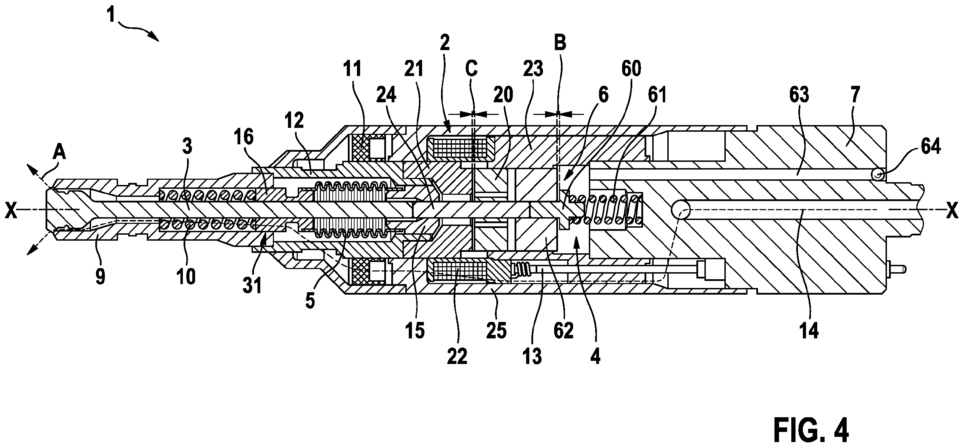

Figur 4 zeigt einen Gasinjektor 1 gemäß einem zweiten Ausführungsbeispiel der Erfindung. Gleiche bzw. funktional gleiche Teile sind wie im ersten Ausführungsbeispiel bezeichnet.

Wie aus Figur 4 ersichtlich ist, ist der Aufbau des Gasinjektors 1 grundsätzlich gleich wie der des ersten Ausführungsbeispiels. Im Unterschied dazu ist allerdings ein Gaspfad 14 im Bereich des Magnetaktors 2 unterschiedlich geführt. Hierbei geht der Gaspfad 14 beim zweiten Ausführungsbeispiel durch den Spulenraum am Magnetaktor 2, in welchem die Spule 22 angeordnet ist. Der Gaspfad 14 führt dabei durch Öffnungen im Magnettopf 25. Dadurch kann auf ein Ventilgehäuse verzichtet werden. Der elektrische Anschluss 13 in Form eines Kontaktpins ist dabei isoliert gegenüber dem Hauptkörper 7. Weiterhin ist ein erster Führungsbereich 31 des Schließelements 3 an einem Außenumfang des Federtellers 16 vorgesehen. Der Federteller 16 weist dabei entsprechend Durchlassöffnungen für den Gaspfad 14 auf. Der Schmiermittelraum 4 ist entsprechend dem ersten Ausführungsbeispiel abgekapselt und stellt eine Schmierung des Ankers 20 bei Öffnungs- und Schließvorgängen des Gasinjektors 1 bereit.

Ansonsten entspricht dieses Ausführungsbeispiel dem ersten Ausführungsbeispiel, sodass auf die dort gegebene Beschreibung verwiesen werden kann.

## Patentansprüche

1. Gasinjektor zum Einblasen eines gasförmigen Brennstoffs, umfassend:
- einen Magnetaktor (2) mit einem Anker (20), einem Innenpol (21) und einer Spule (22),
- ein Schließelement (3), welches einen Gaspfad (14) an einem Ventilsitz (90) freigibt und verschließt, wobei der Anker (20) mit dem Schließelement (3) verbunden ist,
- einen abgeschlossenen Schmiermittelraum (4), der mit einem Schmiermittel gefüllt ist und in welchem der Anker (20) angeordnet ist, wobei das Schmiermittel eine Schmierung des Ankers (20) sicherstellt und
- ein flexibles Dichtelement (5), welches den Schmiermittelraum (4) gegenüber dem Gaspfad (14) abdichtet,
**dadurch gekennzeichnet,**
**dass** im Schmiermittelraum (4) eine Bremseinrichtung (6) angeordnet ist, welche eingerichtet ist, um das Schließelement (3) bei einem Rückstellvorgang des Gasinjektors vom geöffneten in den geschlossenen Zustand abzubremsen, wobei die Bremseinrichtung (6) einen Bremsbolzen (60) und ein elastisches Bremselement (61) aufweist, wobei der Bremsbolzen (60) und das elastische Bremselement (61) beim Rückstellvorgang in Wirkverbindung mit dem Schließelement (3) und/oder dem Anker (20) bringbar ist und wobei das Schließelement (3) eine Ventilnadel ist, die separat zum Bremsbolzen (60) ausgeführt ist.

2. Gasinjektor nach Anspruch 1, wobei der Bremsbolzen (60) in einem Bremsführungselement (62) im Schmiermittelraum (4) geführt ist.

3. Gasinjektor nach Anspruch 2, wobei im geschlossenen Zustand des Injektors ein erster Axialspalt (B) zwischen dem Bremsführungselement (62) und dem Bremsbolzen (60) kleiner ist als ein zweiter Axialspalt (C) zwischen dem Anker (20) und dem Innenpol (21).

4. Gasinjektor nach einem der vorhergehenden Ansprüche, wobei der abgeschlossene Schmiermittelraum (4) vollständig oder teilweise mit Schmiermittel, insbesondere Öl oder Benzin oder Diesel oder Fett, gefüllt ist.

5. Gasinjektor nach einem der vorhergehenden Ansprüche, wobei das flexible Dichtelement (5) ein Balg, insbesondere ein Metallbalg, oder eine Membran ist.

6. Gasinjektor nach einem der vorhergehenden Ansprüche,
- wobei ein Gaspfad (14) für den gasförmigen Brennstoff in einem Bereich zwischen einem Ventilgehäuse (8) und einem Magnetgehäuse (23) des Magnetaktors (2) verläuft oder
- wobei der Gaspfad (14) des gasförmigen Brennstoffs durch einen Bereich des Magnetaktors (2) verläuft, in welchem insbesondere die Spule (22) angeordnet ist.

7. Gasinjektor nach einem der vorhergehenden Ansprüche, wobei der Gasinjektor ein nach außen öffnender Injektor ist.

8. Gasinjektor nach einem der vorhergehenden Ansprüche, wobei ein mittlerer Durchmesser D1 des flexiblen Dichtelements (5) gleich ist wie ein Durchmesser D2 des Ventilsitzes (90) am Ventilkörper (9), an welchem das Schließelement (3) den Gaspfad freigibt und verschließt.

## Claims

1. Gas injector for injecting a gaseous fuel, comprising:
- a magnetic actuator (2) with an armature (20), an internal pole (21) and a coil (22),
- a closing element (3) which opens and closes a gas path (14) on a valve seat (90), the armature (20) being connected to the closing element (3),
- a self-contained lubricant space (4) which is filled with a lubricant and in which the armature (20) is arranged, the lubricant ensuring lubrication of the armature (20), and
- a flexible sealing element (5) which seals the lubricant space (4) with respect to the gas path (14), **characterized**
**in that** a braking device (6) is arranged in the lubricant space (4), which braking device (6) is configured to brake the closing element (3) in the case of a resetting procedure of the gas injector from the open into the closed state, the braking device (6) having a brake bolt (60) and an elastic brake element (61), it being possible for the brake bolt (60) and the elastic brake element (61) to be brought into an operative connection with the closing element (3) and/or the armature (20) in the case of the resetting procedure, and the closing element (3) being a valve needle which is configured separately from the brake bolt (60).

2. Gas injector according to Claim 1, the brake bolt (60) being guided in a brake guide element (62) in the lubricant space (4).

3. Gas injector according to Claim 2, a first axial gap (B) between the brake guide element (62) and the brake bolt (60) being smaller in the closed state of the injector than a second axial gap (C) between the armature (20) and the internal pole (21).

4. Gas injector according to one of the preceding claims, the self-contained lubricant space (4) being filled completely or partially with lubricant, in particular oil or petrol or diesel or grease.

5. Gas injector according to one of the preceding claims, the flexible sealing element (5) being a bellows, in particular a metal bellows, or a diaphragm.

6. Gas injector according to one of the preceding claims,
- a gas path (14) for the gaseous fuel running in a region between a valve housing (8) and a magnet housing (23) of the magnetic actuator (2), or
- the gas path (14) of the gaseous fuel running through a region of the magnetic actuator (2), in which, in particular, the coil (22) is arranged.

7. Gas injector according to one of the preceding claims, the gas injector being an injector which opens to the outside.

8. Gas injector according to one of the preceding claims, a mean diameter D1 of the flexible sealing element (5) being identical to a diameter D2 of the valve seat (90) on the valve body (9), on which the closing element (3) opens and closes the gas path.

## Revendications

1. Injecteur de gaz pour l'injection d'un combustible gazeux, comprenant :
un actionneur magnétique (2) avec un induit (20), un pôle intérieur (21) et une bobine (22),
- un élément de fermeture (3) qui dégage et ferme un trajet de gaz (14) au niveau d'un siège de soupape (90), l'induit (20) étant relié à l'élément de fermeture (3),
- une chambre de lubrification fermée (4) qui est remplie d'un lubrifiant et dans laquelle l'induit (20) est agencé, le lubrifiant assurant une lubrification de l'induit (20) et
- un élément d'étanchéité flexible (5) qui étanchéifie la chambre de lubrifiant (4) par rapport au trajet de gaz (14),
**caractérisé**
**en ce qu'**un dispositif de freinage (6) est agencé dans la chambre de lubrifiant (4), lequel est adapté pour freiner l'élément de fermeture (3) de l'état ouvert à l'état fermé lors d'un processus de rappel de l'injecteur de gaz, le dispositif de freinage (6) présentant un boulon de freinage (60) et un élément de freinage élastique (61), le boulon de freinage (60) et l'élément de freinage élastique (61) pouvant être amenés en liaison active avec l'élément de fermeture (3) et/ou l'induit (20) lors du processus de rappel, et l'élément de fermeture (3) étant un pointeau de soupape qui est réalisé séparément du boulon de freinage (60).

2. Injecteur de gaz selon la revendication 1, dans lequel le boulon de freinage (60) est guidé dans un élément de guidage de frein (62) dans la chambre de lubrifiant (4).

3. Injecteur de gaz selon la revendication 2, dans lequel, à l'état fermé de l'injecteur, un premier espace axial (B) entre l'élément de guidage de frein (62) et le boulon de freinage (60) est inférieur à un deuxième espace axial (C) entre l'induit (20) et le pôle intérieur (21) .

4. Injecteur de gaz selon l'une quelconque des revendications précédentes, dans lequel la chambre de de lubrifiant fermée (4) est entièrement ou partiellement remplie de lubrifiant, notamment d'huile ou d'essence ou de diesel ou de graisse.

5. Injecteur de gaz selon l'une quelconque des revendications précédentes, dans lequel l'élément d'étanchéité flexible (5) est un soufflet, notamment un soufflet métallique, ou une membrane.

6. Injecteur de gaz selon l'une quelconque des revendications précédentes,
- dans lequel un trajet de gaz (14) pour le combustible gazeux s'étend dans une zone entre un boîtier de soupape (8) et un boîtier d'aimant (23) de l'actionneur magnétique (2) ou
- dans lequel le trajet de gaz (14) du combustible gazeux passe par une zone de l'actionneur magnétique (2) dans laquelle est notamment agencée la bobine (22).

7. Injecteur de gaz selon l'une quelconque des revendications précédentes, dans lequel l'injecteur de gaz est un injecteur à ouverture vers l'extérieur.

8. Injecteur de gaz selon l'une quelconque des revendications précédentes, dans lequel un diamètre moyen D1 de l'élément d'étanchéité flexible (5) est égal à un diamètre D2 du siège de soupape (90) sur le corps de soupape (9) au niveau duquel l'élément de fermeture (3) libère et ferme le trajet de gaz.
